# EUROPEAN PATENT SPECIFICATION

(11) **EP 4 495 569 B1**
(45) Date of publication and mention of the grant of the patent: **12.08.2026**
(21) Application number: 23770558.7
(22) Date of filing: 07.03.2023
(51) Int. Cl.: G01M 13/04, F16C 17/24, F16C 19/52

(54) **BEARING DEVICE STATE DETECTING METHOD, DETECTING DEVICE, AND PROGRAM**
VERFAHREN ZUR ERKENNUNG DES ZUSTANDS EINER LAGERVORRICHTUNG, ERKENNUNGSVORRICHTUNG UND PROGRAMM
PROCÉDÉ DE DÉTECTION D'ÉTAT DE DISPOSITIF À PALIER, DISPOSITIF DE DÉTECTION ET PROGRAMME

(30) Priority: 14.03.2022 JP 2022039416; 14.03.2022 JP 2022039417
(43) Date of publication of application: 22.01.2025
(73) Proprietor: NSK Ltd., Tokyo 141-8560 (JP)
(72) Inventor: MARUYAMA Taisuke, Fujisawa-shi, Kanagawa 251-8501 (JP)
(74) Representative: Grünecker Patent- und Rechtsanwälte PartG mbB
(86) International application number: PCT/JP2023/008684
(87) International publication number: WO 2023/176602

(56) References cited:
- JP-A- 2019 211 317
- JP-A- 2019 211 317
- JP-A- 2020 159 754
- JP-A- 2020 159 754
- JP-A- 2020 193 968
- JP-A- 2020 193 968

## Description

### TECHNICAL FIELD

The present invention relates to a detection method, a detection device, and a program for a state of a bearing device.

### BACKGROUND ART

In the related art, in a bearing device, a configuration for lubricating rotation by using a lubricant (for example, a lubricating oil or a grease) is widely used. On the other hand, a rotating component such as a bearing device is periodically subjected to state diagnosis, so that damage or wear is detected at an early stage and occurrence of a failure or the like of the rotating component is suppressed.

In the bearing device using the lubricant, it is required to appropriately detect a state related to the lubricant in order to diagnose an operating state. For example, Patent Literature 1 discloses a method of applying a low DC voltage to a bearing and diagnosing an oil film state of the bearing based on a measured voltage. Further, Patent Literature 2 discloses a method of modeling an oil film as a capacitor, applying an AC voltage to a rotating ring of a bearing in a non-contact state, and estimating an oil film state of a bearing device based on a measured capacitance.

Patent Literature 3 describes a method for diagnosing a rolling device including an external member, an internal member, a rolling member, and a lubricant, the method being for diagnosing the state of contact between the surfaces of the members and the lubricant, in which an AC voltage is applied to an electric circuit including an external member, an internal member, a rolling member, and a lubricant, the impedance and the phase angle of the electric circuit when the AC voltage is applied are measured, the thickness of the lubricant film in at least one of between the external member and the rolling member and between the internal member and the rolling member is calculated on the basis of the measured impedance and the phase angle, the ratio of metal contact in at least one of between the external member and the rolling member and between the internal member and the rolling member is calculated on the basis of the measured impedance and the phase angle, and the impedance and the phase angle of the electric circuit are measured at two or more different voltages.

### CITATION LIST

### PATENT LITERATURE

Patent Literature 1: Japanese Utility Model Application No. 5-003685
Patent Literature 2: JP 4942496 B2
Patent Literature 3: JP 2020 193968 A

### SUMMARY OF INVENTION

### TECHNICAL PROBLEM

In recent years, there has been a demand for a lower torque for the bearing device. In response to the lower torque, the lubricant used in the bearing device has been reduced in viscosity and oil volume. On the other hand, for example, a larger load is applied to a bearing device used in a large-sized device such as a windmill. In such a situation, the possibility that the oil film inside the bearing device is broken or a contact ratio of components is increased. Therefore, it is required to appropriately detect a contact state between components inside the bearing device in addition to an oil film thickness. There are various types of bearing devices, for example, a slide bearing is included. In such a bearing device, a line contact may occur between a rotation shaft and a peripheral component in association with an operation of the bearing device. For example, according to the technique described in Patent Literature 2, only the oil film thickness is measured, and it is difficult to grasp a metal contact ratio. Since a capacitance outside a contact region was not considered, the measurement accuracy was not high. Further, no measurement was performed on the assumption of the line contact.

In view of the above problems, an object of the present invention is to detect an oil film thickness and a metal contact ratio between components inside a bearing device with high accuracy on the assumption of line contact occurring inside the bearing device.

### SOLUTION TO PROBLEM

In order to solve the above problems, one aspect of the present invention is a detection method for detecting a state of a bearing device including a slide bearing according to claim 1.

Another aspect of the present invention is a detection device for detecting a state of a bearing device including a slide bearing according to claim 6.

Another aspect of the present invention is a program according to claim 7.

### ADVANTAGEOUS EFFECTS OF INVENTION

According to the present invention, it is possible to detect an oil film thickness and a contact ratio between components inside a bearing device with high accuracy on the assumption of line contact occurring inside the bearing device.

### BRIEF DESCRIPTION OF DRAWINGS

[FIG. 1] FIG. 1 is a schematic diagram showing an example of a device configuration at the time of diagnosis according to a first embodiment of the present invention.
[FIG. 2] FIG. 2 is a graph showing a physical model of a bearing device according to the first embodiment of the present invention.
[FIG. 3] FIG. 3 is a circuit diagram for explaining an equivalent circuit of the bearing device according to the first embodiment of the present invention.
[FIG. 4] FIG. 4 is a diagram for explaining a rolling element (ball) of the bearing device.
[FIG. 5] FIG. 5 is a diagram for explaining a rotation shaft.
[FIG. 6] FIG. 6 is a diagram for explaining a slide bearing and the rotation shaft.
[FIG. 7] FIG. 7 is a diagram for explaining validation results according to the first embodiment of the present invention.
[FIG. 8] FIG. 8 is a flowchart of a processing at the time of measurement according to the first embodiment of the present invention.

### DESCRIPTION OF EMBODIMENTS

Hereinafter, embodiments of the present invention will be described with reference to the drawings. The embodiments described below are embodiments for explaining the present invention, and are not intended to be interpreted to limit the present invention, and all the configurations described in the embodiments are not necessarily essential configurations for solving the problem of the present invention. In the drawings, the same components are denoted by the same reference numerals, thereby showing a correspondence relationship therebetween.

### <First Embodiment>

### [Device Configuration]

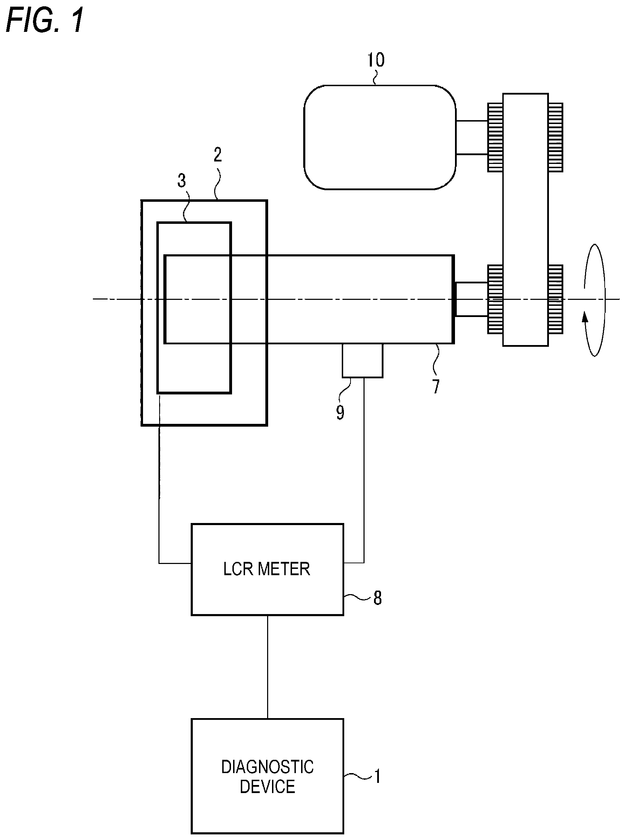

FIG. 1 is a schematic configuration diagram showing an example of an overall configuration when a diagnostic device 1 according to the present embodiment performs diagnosis. In FIG. 1, a bearing device 2 to which a diagnostic method according to the present embodiment is applied and the diagnostic device 1 that performs the diagnosis are provided. Although a configuration in which the bearing device 2 includes one slide bearing 3 is shown in FIG. 1, the present invention is not limited thereto, and the bearing device 2 may include a plurality of slide bearings.

The bearing device 2 includes the slide bearing 3. In the bearing device 2, the slide bearing 3 is provided around a rotation shaft 7, and is configured to be rotatable while causing a line contact with the rotation shaft 7. In the slide bearing 3, friction between the rotation shaft 7 and the slide bearing 3 is reduced by a predetermined lubrication method. The lubrication method is not particularly limited, and for example, grease lubrication, oil lubrication, or the like is used and supplied to the inside of the slide bearing 3. A type of a lubricant is also not particularly limited.

A motor 10 is a motor for driving, and supplies power by rotation to the rotation shaft 7. The rotation shaft 7 is connected to an LCR meter 8 via a rotation connector 9. The rotation connector 9 may be configured with, for example, a carbon brush, and is not limited thereto. Further, the slide bearing 3 of the bearing device 2 is also electrically connected to the LCR meter 8, and at this time, the LCR meter 8 also functions as an AC power supply for the bearing device 2.

The diagnostic device 1 operates as a detection device capable of executing a detection method according to the present embodiment. At the time of diagnosis, the diagnostic device 1 instructs the LCR meter 8 to use, as inputs, an angular frequency ω of the AC power supply and an AC voltage V, and acquires, as outputs corresponding thereto, an impedance |Z] (|Z| is an absolute value of Z) and a phase angle θ of the bearing device 2 from the LCR meter 8. Then, the diagnostic device 1 detects an oil film thickness and a metal contact ratio in the bearing device 2 by using these values. Details of the detection method will be described later.

The diagnostic device 1 may be implemented by, for example, an information processing device including a control device, a storage device, and an output device, which are not shown. The control device may include a central processing unit (CPU), a micro processing unit (MPU), a digital single processor (DSP), or a dedicated circuit. The storage device includes volatile and nonvolatile storage media such as a hard disk drive (HDD), a read only memory (ROM), and a random access memory (RAM), and may input and output various kinds of information in response to an instruction from the control device. The output device includes a speaker, a light, or a display device such as a liquid crystal display, and performs notification to an operator in response to an instruction from the control device. A notification method by the output device is not particularly limited, and for example, may be an auditory notification by voice or a visual notification by screen output. The output device may be a network interface having a communication function, and may perform a notification operation by transmitting data to an external device (not shown) via a network (not shown). For example, when abnormality diagnosis is performed based on a detection result, a notification content is not limited to a notification when an abnormality is detected, and may include a notification indicating that the bearing device 2 is normal.

### [Physical Model]

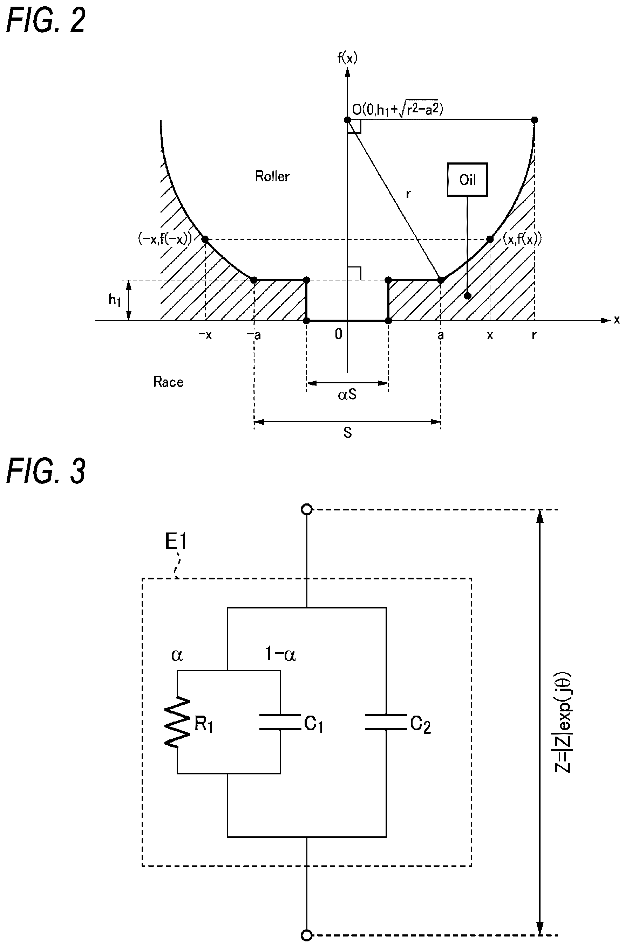

A contact state between the slide bearing 3 of the bearing device 2 and the rotation shaft 7 will be described with reference to FIG. 2. FIG. 2 is a graph showing a physical model when a roller segment and a race segment are in contact (here, the line contact) with each other. The roller segment corresponds to the rotation shaft 7, and the race segment corresponds to the slide bearing 3. An h axis indicates a direction of the oil film thickness, and a y axis indicates a direction orthogonal to the direction of the oil film thickness. Variables shown in FIG. 2 are as follows. In the following description, the same variables in equations are denoted by the same reference numerals to show a correspondence relation.
S: Hertzian contact region
a: contact width in transverse direction (here, x-axis direction) of roller segment (rotation shaft)
α: breakage rate of oil film (metal contact ratio) (0 ≤ α < 1)
r: radius of roller segment
αS: actual contact region (breakage region of oil film)
h: oil film thickness
h₁: oil film thickness in Hertzian contact region
O: rotation center of roller segment

In the Hertzian contact region, a ratio of an area in which a metal is in contact to an area in which the metal is not in contact is α: (1 - α). In an ideal state in which the roller segment and the race segment are not in contact with each other, α = 0, and when x = 0, h > 0.

The oil film thickness h shown in FIG. 2 is expressed by the following Equation (1). A value of S shown here corresponds to the range in the x-axis direction in FIG. 1. $h = f \left(x\right) = {h}_{1} + √ \left({r}^{2}-{a}^{2}\right) - √ \left({r}^{2}-{x}^{2}\right) \left(-r\leq x<-a or a<x\leq r\right)$

In addition, in the Hertzian contact region, there may be a thin oil film region called a horseshoeshaped portion, and in the present embodiment, an average oil film thickness hₐ that is an average oil film thickness in the Hertzian contact region is used. Therefore, when the oil film is broken in the Hertzian contact region, hₐ is obtained by the following Equation (2). ${h}_{a} = \left(1-α\right) {h}_{1}$

In FIG. 2, O is x = 0, and coordinates of O in FIG. 2 are represented by O (0, h₁ + √(r² - a²)).

Since the rotation shaft 7 may be elastically deformed when the actual slide bearing 3 is operated, a cross section thereof may not have a perfect circular shape in a strict sense, but in the present embodiment, the above Equation (1) is used assuming that the cross section has a perfect circular shape. Therefore, an equation used to acquire the oil film thickness is not limited to Equation (1), and other calculation formulas may be used (for example, an involute curve in the case of a gear).

### [Equivalent Electric Circuit]

FIG. 3 is a diagram showing the physical model shown in FIG. 2 by an electrically equivalent electric circuit (equivalent circuit). An equivalent circuit E1 includes a resistor R₁, a capacitor C₁, and a capacitor C₂. The resistor R₁ corresponds to a resistor in the breakage region (= αS). The capacitor C₁ corresponds to a capacitor formed by an oil film in the Hertzian contact region, and has a capacitance C₁. The capacitor C₂ corresponds to a capacitor formed by an oil film in the vicinity of the Hertzian contact region (-r ≤ x < -a and a < x ≤ r in FIG. 2), and has a capacitance C₂. The Hertzian contact region (= S) forms a parallel circuit of the resistor R₁ and the capacitor C₁ in the equivalent circuit E1 of FIG. 3. Further, the capacitor C₂ is connected in parallel to an electric circuit including the resistor R₁ and the capacitor C₁. At this time, it is assumed that the lubricant is filled in the vicinity of the Hertzian contact region (-r ≤ x < -a, and a < y ≤ r in FIG. 2).

An impedance of the equivalent circuit E1 is denoted by Z. Here, an AC voltage V applied to the equivalent circuit E1, a current I flowing through the equivalent circuit E1, and a complex impedance Z of the entire equivalent circuit E1 are expressed by the following Equations (3) to (5). $V = \left|V\right| exp \left(jωt\right)$ $I = \left|I\right| exp \left(j\left(ωt-θ\right)\right)$ $Z = V / I = \left|V/I\right| exp \left(jθ\right) = \left|Z\right| exp \left(jθ\right)$
j: imaginary number
ω: angular frequency of AC voltage
t: time
θ: phase angle (shift in phase between voltage and current)

As shown in Equation (5), the complex impedance Z is represented by two independent variables, that is, the absolute value |Z| of Z and the phase angle θ. This means that two independent parameters (in the present embodiment, hₐ and α shown below) can be measured by measuring the complex impedance Z. The complex impedance Z of the entire equivalent circuit shown in FIG. 3 is expressed by the following Equation (6). ${Z}^{- 1} = {{R}_{1}}^{- 1} + jω \left({C}_{1}+{C}_{2}\right)$
R₁: resistance value of resistor R₁
C₁: capacitance of capacitor C₁
C₂: capacitance of capacitor C₂
|Z|: impedance in dynamic contact state

Further, the following Equation (7) and Equation (8) can be derived from Equation (6). ${R}_{1} = \left|Z\right| / cosθ$ $ω \left({C}_{1}+{C}_{2}\right) = - sinθ / \left|Z\right|$

Here, since R₁ in Equation (7) has an inverse relation with the contact area, it can be expressed as the following Equation (9). ${R}_{1} = {R}_{10} / α$ R₁₀: resistance value at rest (that is, α = 1)

R₁₀ can be expressed by the following Equation (10). ${R}_{10} = \left|{Z}_{0}\right| / cos {θ}_{0}$
|Z₀|: impedance in static contact state
θ₀: phase angle in static contact state

Therefore, the breakage rate α can be expressed as the following Equation (11) from Equation (7), Equation (9), and Equation (10). When θ₀ is the phase angle in the static contact state as described above, θ can be regarded as a phase angle in the dynamic contact state. [Math. 1] $α = \frac{\left|{Z}_{0}\right| cos θ}{\left|Z\right| cos {θ}_{0}}$

On the other hand, C₁ in Equation (6) and Equation (8) can be expressed as the following Equation (12). In a case in which the line contact is assumed, the contact area of the Hertzian contact region S is S = 2aL when the length (here, a contact width in a longitudinal direction) of the rotation shaft 7 is L.
[Math. 2] ${C}_{1} = \frac{ε \left(1-α\right) S}{{h}_{1}} = \frac{2 ε \left(1-α\right) aL}{{h}_{1}}$ ε: dielectric constant of lubricant

Further, C₂ in Equation (6) and Equation (8) can be expressed as the following Equation (13).
[Math. 3] ${C}_{2} = 2 ε {\int }_{a}^{r} \frac{Ldx}{f \left(x\right)} \approx 2 πεL \sqrt{\frac{r}{2 {h}_{1}}}$

### [Capacitance According to Contact State]

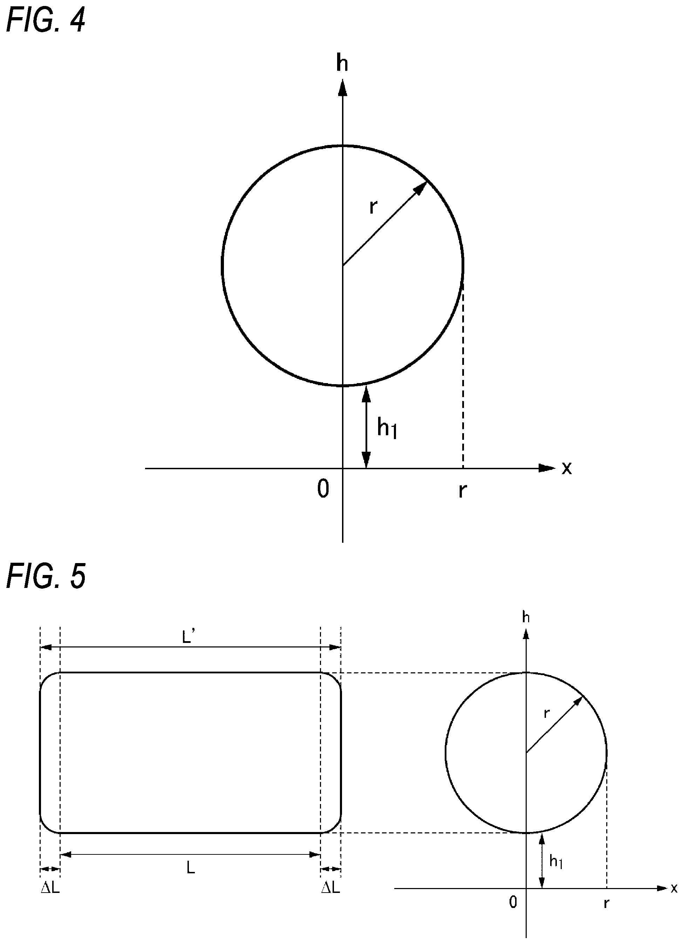

Here, C₂ in a point contact will be described. FIG. 4 is a diagram for explaining a case in which the rolling elements are balls (for example, a ball bearing). Here, a value of h₁ is shown as a large value for ease of description, but actually, as shown in FIG. 2, the value is small enough to generate a contact (the point contact in this case). In this case, the point contact may occur between the rolling elements and a track portion.

Similarly to FIG. 2, when the radius of the rolling element is set to r and the oil film thickness is set to h₁, the capacitance of the capacitor C₂ in the equivalent circuit shown in FIG. 3 can be calculated by the following Equation (14).
[Math. 4] ${C}_{2} = 2 πεγ ln \left(\frac{r}{{h}_{1}}\right)$
π: pi
r: radius of ball
ε: dielectric constant of lubricant
ln: logarithmic function

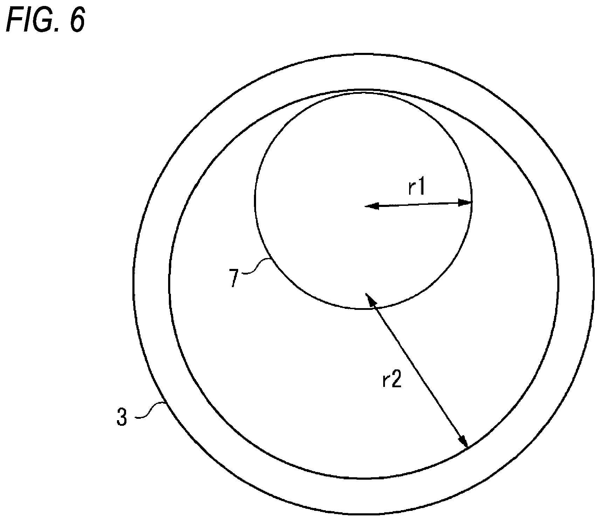

Next, a case in which the line contact to be handled in the present embodiment occurs will be described. FIG. 5 is a diagram for explaining the case of the rotation shaft 7 and the slide bearing 3. Here, similarly to FIG. 4, the value of h₁ is shown as a large value for ease of description, but actually, as shown in FIG. 2, the value is small enough to generate a contact (the line contact in this case). In this case, the line contact may occur between the rotation shaft 7 and the slide bearing 3. As shown in FIG. 6, when a radius of the rotation shaft 7 is set to r1 and a radius of an inner diameter of the slide bearing 3 is set to r2, r can be calculated as an equivalent curvature radius by using r1 and r2. At this time, a surface of the slide bearing 3 on which the line contact with the rotation shaft 7 occurs has a negative curved surface.

An oil film thickness at a position in which the line contact between the rotation shaft 7 and the slide bearing 3 occurs is set to h₁. In this case, the capacitance of the capacitor C₂ in the equivalent circuit shown in FIG. 3 can be calculated by the above Equation (13).

As shown in FIG. 5, the rotation shaft 7 may be formed by chamfering edges. In this case, a straight portion in which the line contact may occur may be handled as L. When a length ΔL in the longitudinal direction due to the chamfering is extremely small with respect to L, the capacitor C2 may be calculated by using a length L' (= L + 2ΔL) including chamfered portions.

At this time, when the symbols shown in FIGs. 2 and 5 are used, a contact area by the line contact (that is, the contact area of the Hertzian contact region S) can be represented by 2aL.

In addition, the point contact may occur in the chamfered portion instead of the line contact. Therefore, regarding this portion, the capacitor C₂ may be further added to the calculation formula (13) by using the calculation formula (for example, the above Equation (14)) of C₂ caused by the point contact.

An example is shown in which a calculation result of the capacitor C₂ is verified by using a theoretical equation defined by the above Equation (13). Here, a comparison with a result of simulation analysis using a finite element method, which is a known method of electromagnetic field analysis, is shown. In addition, the following Equation (15) by Jackson, which is a known calculation formula, is shown as a comparison target. The equation by Jackson assumes a case in which h₁ is extremely larger than r.
[Math. 5] ${C}_{2} = \frac{2 πεL}{arcosh \left(\frac{{h}_{1}}{r}+2\right)}$

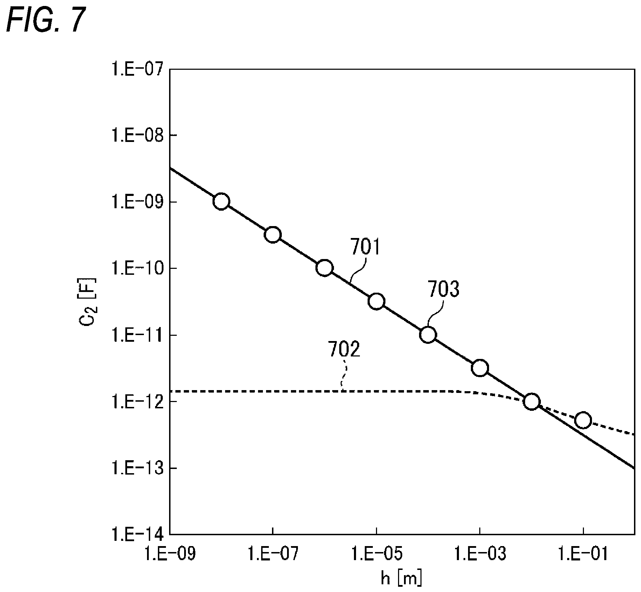

FIG. 7 is a graph showing validation results, the horizontal axis indicates the oil film thickness h₁ [m], and the vertical axis indicates the capacitance C₂ [F]. A line 701 indicates a calculation result of the capacitance C₂ acquired by using Equation (13) which is the calculation formula according to the present embodiment. A line 702 indicates a calculation result of the capacitance C₂ acquired by using Equation (15) which is the calculation formula by Jackson. A symbol 703 (∘) indicates a result acquired by simulation using the finite element method.

As shown by the line 701 and the symbol 703 in FIG. 7, a value of the capacitance C2 calculated by using Equation (13) can be derived to be substantially the same value as the result of simulation in the range of 1.0⁻² ≥ h. This range corresponds to the size or the like (h₁ is extremely smaller than r) of the slide bearing 3 assumed in the present invention, and can achieve higher accuracy than the line 702 according to Equation (15) by Jackson.

### [Derivation of Oil Film Thickness and Breakage Rate of Oil Film]

In the present embodiment, a lubrication state is detected by using the oil film thickness h₁ of the lubricant and the breakage rate α of the oil film as described above. The following Equation (16) is derived from Equation (8) and Equations (11) to (13) described above.
[Math. 6] ${h}_{1} = \frac{8 {\left(1-α\right)}^{2} {a}^{2}}{r} {\left(\frac{1 + \sqrt{1 + ψ}}{πψ}\right)}^{2}$

In this case, ψ is defined as the following Equation (17).
[Math. 7] $ψ = - \frac{4 \left(1-α\right) a sin θ}{{π}^{2} rLεω \left|Z\right|}$ L: length of rotation shaft

Further, the average oil film thickness hₐ is derived as the following Equation (18) from Equation (2) and Equation (16).
[Math. 8] ${h}_{a} = \frac{8 {\left(1-α\right)}^{3} {a}^{2}}{r} {\left(\frac{1 + \sqrt{1 + ψ}}{πψ}\right)}^{2}$

That is, hₐ and α can be monitored at the same time by measuring the complex impedance and the phase angle at rest and during oil film formation according to Equation (11) and Equation (18).

The above Equation (18) is a theoretical equation in the case of one contact region.

### [Processing Flow]

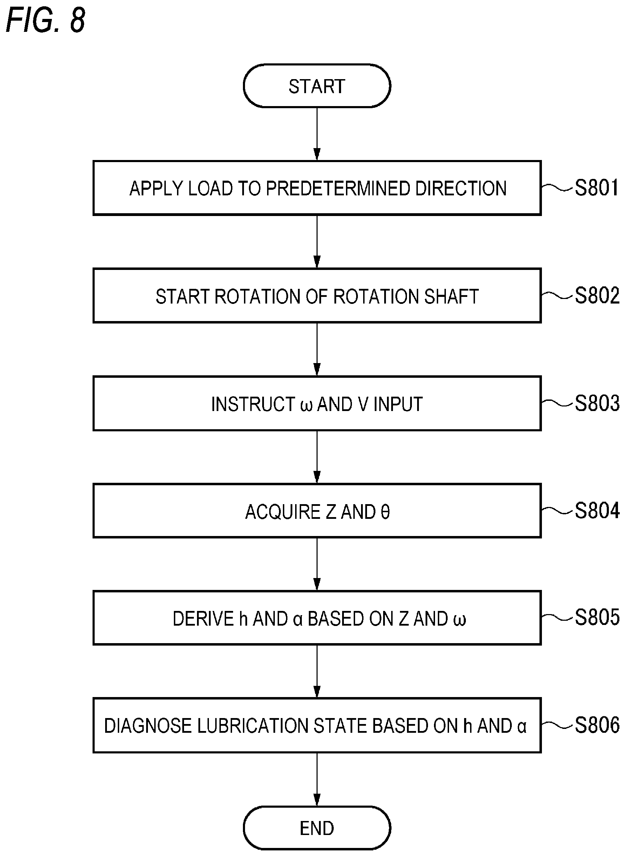

FIG. 8 is a flowchart of a diagnosis processing according to the present embodiment. The processing is executed by the diagnostic device 1, and may be implemented by, for example, reading out a program for implementing the processing according to the present embodiment from the storage device (not shown) and executing the program by the control device (not shown) included in the diagnostic device 1.

In S801, the diagnostic device 1 performs control such that a load is applied to the bearing device 2 in a predetermined direction. In the case of the configuration in FIG. 1, the load is applied to the rotation shaft 7. The control of applying the load may be performed by a device other than the diagnostic device 1. At this time, the phase angle in the static contact state and the impedance are measured.

In step S802, the diagnostic device 1 causes the motor 10 to start rotating the rotation shaft 7. Accordingly, the rotation shaft 7 rotates while the line contact between the rotation shaft 7 and the slide bearing 3 occurs. The motor 10 may be controlled by a device other than the diagnostic device 1.

In step S803, the diagnostic device 1 controls the LCR meter 8 to supply the AC voltage V of the angular frequency ω to the bearing device 2 by using an AC power supply (not shown) included in the LCR meter 8. Accordingly, the AC voltage of the angular frequency ω is applied to the bearing device 2.

In step S804, the diagnostic device 1 acquires the impedance |Z| and the phase angle θ from the LCR meter 8 as the output corresponding to the input in S803. That is, the LCR meter 8 outputs the impedance |Z| and the phase angle θ to the diagnostic device 1 as detection results of the bearing device 2 with respect to the AC voltage V and the angular frequency ω of the AC voltage which are inputs.

In S805, the diagnostic device 1 derives the oil film thickness h (hₐ in the present embodiment) and the breakage rate α by applying, to Equations (11) and (18), the impedance |Z| and the phase angle θ acquired in S804 and the angular frequency ω of the AC voltage used in S803.

In S806, the diagnostic device 1 diagnoses the lubrication state of the bearing device 2 by using the oil film thickness h and the breakage rate α derived in S805. In the diagnostic method here, for example, a threshold may be provided for the oil film thickness h or the breakage rate α, and the lubrication state may be determined based on comparison with the threshold. Then, the processing flow ends.

As described above, according to the present embodiment, it is possible to detect an oil film thickness and a contact ratio between components inside the bearing device with high accuracy on the assumption of line contact occurring inside a rolling bearing.

The present application is based on Japanese patent applications (No. 2022-039416, No. 2022-039417) filed on March 14, 2022.

### REFERENCE SIGNS LIST

1 diagnostic device
2 bearing device
3 slide bearing
7 rotation shaft
8 LCR meter
9 rotation connector
10 motor

## Claims

1. A detection method for detecting a state of a bearing device (2) including a slide bearing (3), comprising:
applying an AC voltage to an electric circuit including the slide bearing (3) and a rotation shaft (7);
measuring an impedance and a phase angle of the electric circuit when the AC voltage is applied; and
deriving an oil film thickness and a metal contact ratio between the slide bearing (3) and the rotation shaft (7) based on the impedance and the phase angle, wherein
the oil film thickness and the metal contact ratio are derived by using a calculation formula corresponding to an electric circuit constructed by a line contact generated between the slide bearing (3) and the rotation shaft (7) in the bearing device (2).

2. The detection method according to claim 1, wherein
the electric circuit constructed by the line contact includes a resistor generated by the line contact, a first capacitor constructed by a lubricant located within a predetermined range from the line contact, and a second capacitor constructed by a lubricant located outside the predetermined range.

3. The detection method according to claim 2, wherein
a capacitance C₁ of the first capacitor is represented by ${C}_{1} = \frac{2 ε \left(1-α\right) aL}{{h}_{1}}$
, **where, ε: dielectric constant of lubricant,**
**α: breakage rate of oil film (metal contact ratio) (0 ≤ α < 1),**
a: contact width in transverse direction of rotation shaft,
L: length of rotation shaft, and
h₁: oil film thickness in Hertzian contact region, and
a capacitance C₂ of the second capacitor is represented by ${C}_{2} = 2 πεL \sqrt{\frac{r}{2 {h}_{1}}}$
, where, r: radius of roller segment.

4. The detection method according to claim 2 or 3, wherein
the calculation formula for deriving the oil film thickness h₁ and the metal contact ratio α includes $α = \frac{\left|{Z}_{0}\right| cos θ}{\left|Z\right| {cosθ}_{0}}$ ${h}_{1} = \frac{8 {\left(1-α\right)}^{2} {a}^{2}}{r} {\left(\frac{1 + \sqrt{1 + ψ}}{πψ}\right)}^{2}$ , and $ψ = - \frac{4 \left(1-α\right) a sin θ}{{π}^{2} rLεω \left|Z\right|}$
where, |Z|: impedance in dynamic contact state,
|Z₀|: impedance in static contact state,
**θ: phase angle in dynamic contact state,**
θ₀: phase angle in static contact state,
**ε: dielectric constant of lubricant,**
**α: breakage rate of oil film (metal contact ratio) (0 ≤ α < 1),**
a: contact width in transverse direction of rotation shaft,
L: length of rotation shaft,
h₁: oil film thickness in Hertzian contact region,
r: radius of roller segment, and
**ω: angular frequency of AC voltage.**

5. The detection method according to any one of claims 1 to 4, further comprising:
diagnosing the bearing device (2) by using the oil film thickness and the metal contact ratio.

6. A detection device for detecting a state of a bearing device (2) including a slide bearing (3), comprising:
an acquiring unit configured to acquire an impedance and a phase angle of an electric circuit including the slide bearing (3) and a rotation shaft (7) at the time of application of an AC voltage, which are acquired when the AC voltage is applied to the electric circuit; and
a deriving unit configured to derive, based on the impedance and the phase angle, an oil film thickness and a metal contact ratio between the slide bearing (3) and the rotation shaft (7), wherein
the deriving unit derives the oil film thickness and the metal contact ratio by using a calculation formula corresponding to an electric circuit constructed by a line contact generated between the slide bearing (3) and the rotation shaft (7) in the bearing device (2).

7. A program for causing a computer to function as:
an acquiring unit configured to acquire, with respect to a bearing device (2) including a slide bearing (3), an impedance and a phase angle of an electric circuit including the slide bearing (3) and a rotation shaft (7) at the time of application of an AC voltage, which are acquired when the AC voltage is applied to the electric circuit; and
a deriving unit configured to derive, based on the impedance and the phase angle, an oil film thickness and a metal contact ratio between the slide bearing (3) and the rotation shaft (7), wherein
the deriving unit derives the oil film thickness and the metal contact ratio by using a calculation formula corresponding to an electric circuit constructed by a line contact generated between the slide bearing (3) and the rotation shaft (7) in the bearing device (2).

## Patentansprüche

1. Erfassungsverfahren zum Erfassen eines Zustands einer Lagervorrichtung (2), die ein Gleitlager (3) enthält, umfassend:
Anlegen einer Wechselspannung an einem Stromkreis, der das Gleitlager (3) und eine Drehwelle (7) enthält,
Messen einer Impedanz und eines Phasenwinkels des Stromkreises, wenn die Wechselspannung angelegt wird, und
Ableiten einer Ölfilmdicke und eines Metallkontaktverhältnisses zwischen dem Gleitlager (3) und der Drehwelle (7) basierend auf der Impedanz und dem Phasenwinkel, wobei:
die Ölfilmdicke und das Metallkontaktverhältnis unter Verwendung einer Berechnungsformel in Entsprechung zu einem Stromkreis, die durch einen zwischen dem Gleitkontakt (3) und der Drehwelle (7) in dem Lagergerät (2) erzeugten Linienkontakt gebildet wird, abgeleitet werden.

2. Erfassungsverfahren nach Anspruch 1, wobei:
der durch den Linienkontakt gebildete Stromkreis einen Widerstand, der durch den Linienkontakt erzeugt wird, einen ersten Kondensator, der durch ein in einem vorbestimmten Bereich von dem Linienkontakt vorhandenes Schmiermittel gebildet wird, und einen zweiten Kondensator, der durch ein außerhalb des vorbestimmten Bereichs vorhandenes Schmiermittel gebildet wird, enthält.

3. Erfassungsverfahren nach Anspruch 2, wobei:
eine Kapazität C₁ des ersten Kondensators durch die folgende Formel wiedergegeben wird: ${C}_{1} = \frac{2 ε \left(1-α\right) aL}{{h}_{1}}$
**wobei:**
ε: dielektrische Konstante des Schmiermittels,
α: Brechrate des Ölfilms (Metallkontaktverhältnis) (0 ≤ α < 1),
a: Kontaktbreite in der Querrichtung der Drehwelle,
L: Länge der Drehwelle, und
h₁: Ölfilmdicke im Hertzschen Kontaktbereich, und
wobei eine Kapazität C₂ des zweiten Kondensators durch die folgende Formel wiedergegeben wird: ${C}_{2} = 2 πεL \sqrt{\frac{r}{2 {h}_{1}}}$
wobei:
r: Radius des Rollensegments.

4. Erfassungsverfahren nach Anspruch 2 oder 3, wobei:
die Berechnungsformel für das Ableiten der Ölfilmdicke h₁ und des Metallkontaktverhältnisses α enthält: $α = \frac{\left|{Z}_{0}\right| cos θ}{\left|Z\right| {cosθ}_{0}}$ ${h}_{1} = \frac{8 {\left(1-α\right)}^{2} {a}^{2}}{r} {\left(\frac{1 + \sqrt{1 + ψ}}{πψ}\right)}^{2}$ und $ψ = - \frac{4 \left(1-α\right) a sin θ}{{π}^{2} rLεω \left|Z\right|}$
wobei:
|Z|: Impedanz in dynamischem Kontaktzustand,
|Z₀|: Impedanz in statischem Kontaktzustand,
θ: Phasenwinkel in dynamischen Kontaktzustand,
θ₀: Phasenwinkel in statischem Kontaktzustand,
ε: dielektrische Konstante des Schmiermittels,
α: Bruchrate des Ölfilms (Metallkontaktverhältnis (0 ≤ α < 1),
a: Kontaktbreite in der Querrichtung der Drehwelle,
L: Länge der Drehwelle,
h₁: Ölfilmdicke in Hertzschem Kontaktbereich,
r: Radius des Rollensegments, und
ω: Winkelfrequenz der Wechselspannung.

5. Erfassungsverfahren gemäß einem der Ansprüche 1 bis 4, das weiterhin umfasst:
Diagnostizieren der Lagervorrichtung (2) unter Verwendung der Ölfilmdicke und des Metallkontaktverhältnisses.

6. Erfassungsvorrichtung zum Erfassen eines Zustands einer Lagervorrichtung (2), die ein Gleitlager (3) enthält, umfassend:
eine Erhaltungseinheit, die konfiguriert ist zum Erhalten einer Impedanz und eines Phasenwinkels eines Stromkreises, der das Gleitlager (3) und eine Drehwelle (7) enthält, zum Zeitpunkt der Anlegung einer Wechselspannung, wobei sie erhalten werden, wenn die Wechselspannung an dem Stromkreis angelegt wird,
eine Ableitungseinheit, die konfiguriert ist zum Ableiten, basierend auf der Impedanz und dem Phasenwinkel, einer Ölfilmdicke und eines Metallkontaktverhältnisses zwischen dem Gleitlager (3) und der Drehwelle (7), wobei:
die Ableitungseinheit die Ölfilmdicke und das Metallkontaktverhältnis unter Verwendung einer Berechnungsformel in Entsprechung zu einem Stromkreis, der durch einen zwischen dem Gleitlager (3) und der Drehwelle (7) in der Lagervorrichtung (2) erzeugten Linienkontakt gebildet wird, ableitet.

7. Programm zum Veranlassen eines Computers zum Funktionieren als:
eine Erhaltungseinheit, die konfiguriert ist zum Erhalten, in Bezug auf eine Lagervorrichtung (2), die ein Gleitlager (3) enthält, einer Impedanz und eines Phasenwinkels eines Stromkreises, der das Gleitlager (3) und eine Drehwelle (7) enthält, zum Zeitpunkt der Anlegung einer Wechselspannung, wobei sie erhalten werden, wenn die Wechselspannung an dem Stromkreis angelegt wird,
eine Ableitungseinheit, die konfiguriert ist zum Ableiten, basierend auf der Impedanz und dem Phasenwinkel, einer Ölfilmdicke und eines Metallkontaktverhältnisses zwischen dem Gleitlager (3) und der Drehwelle (7), wobei:
die Ableitungseinheit die Ölfilmdicke und das Metallkontaktverhältnis unter Verwendung einer Berechnungsformel in Entsprechung zu einem Stromkreis, der durch einen zwischen dem Gleitlager (3) und der Drehwelle (7) in der Lagervorrichtung (2) erzeugten Linienkontakt gebildet wird, ableitet.

## Revendications

1. Procédé de détection pour détecter l'état d'un dispositif à palier (2) comportant un palier coulissant (3), comprenant les étapes consistant à :
appliquer une tension AC à un circuit électrique comportant le palier coulissant (3) et un arbre de rotation (7) ;
mesurer une impédance et un angle de phase du circuit électrique lorsque la tension AC est appliquée ; et
dériver une épaisseur de film d'huile et un rapport de contact métallique entre le palier coulissant (3) et l'arbre de rotation (7) sur la base de l'impédance et de l'angle de phase, dans lequel
l'épaisseur de film d'huile et le rapport de contact métallique sont dérivés à l'aide d'une formule de calcul correspondant à un circuit électrique construit par un contact linéaire généré entre le palier coulissant (3) et l'arbre de rotation (7) dans le dispositif à palier (2).

2. Procédé de détection selon la revendication 1, dans lequel
le circuit électrique construit par le contact linéaire comporte une résistance générée par le contact linéaire, un premier condensateur construit par un lubrifiant situé dans une plage prédéterminée par rapport au contact linéaire, et un second condensateur construit par un lubrifiant situé en dehors de la plage prédéterminée.

3. Procédé de détection selon la revendication 2, dans lequel
une capacité C₁ du premier condensateur est représentée par ${C}_{1} = \frac{2 ε \left(1-α\right) aL}{{h}_{1}}$
où, ε : constante diélectrique du lubrifiant,
α : taux de rupture du film d'huile (rapport de contact métallique) (0 ≤ α < 1),
a : largeur de contact dans la direction transversale de l'arbre de rotation,
L : longueur de l'arbre de rotation, et
h₁ : épaisseur du film d'huile dans la région de contact hertzien, et
une capacité C₂ du second condensateur est représentée par ${C}_{2} = 2 πεL \sqrt{\frac{r}{2 {h}_{1}}}$
où, r : rayon du segment de rouleau.

4. Procédé de détection selon la revendication 2 ou 3, dans lequel
la formule de calcul pour dériver l'épaisseur de film d'huile h₁ et le rapport de contact métallique α comporte $α = \frac{\left|{Z}_{0}\right| cos θ}{\left|Z\right| cos {θ}_{0}}$ ${h}_{1} = \frac{8 {\left(1-α\right)}^{2} {a}^{2}}{r} {\left(\frac{1 + \sqrt{1 + ψ}}{πψ}\right)}^{2}$ et $ψ = - \frac{4 \left(1-α\right) a sin θ}{{π}^{2} rLεω \left|Z\right|}$
où, |Z| : impédance en état de contact dynamique,
|Z₀| : impédance en état de contact statique,
θ : angle de phase en état de contact dynamique,
θ₀ : angle de phase en état de contact statique,
ε : constante diélectrique du lubrifiant,
α : taux de rupture du film d'huile (rapport de contact métallique) (0 ≤ α < 1),
a : largeur de contact dans la direction transversale de l'arbre de rotation,
L : longueur de l'arbre de rotation,
h₁ : épaisseur du film d'huile dans la région de contact hertzien,
r : rayon du segment de rouleau, et
ω : fréquence angulaire de la tension AC.

5. Procédé de détection selon l'une quelconque des revendications 1 à 4, comprenant en outre :
le diagnostic du dispositif à palier (2) en utilisant l'épaisseur de film d'huile et le rapport de contact métallique.

6. Dispositif de détection pour détecter un état d'un dispositif à palier (2) comportant un palier coulissant (3), comprenant :
une unité d'acquisition configurée pour acquérir une impédance et un angle de phase d'un circuit électrique comportant le palier coulissant (3) et un arbre de rotation (7) au moment de l'application d'une tension AC, qui sont acquis lorsque la tension AC est appliquée au circuit électrique ; et
une unité de dérivation configurée pour dériver, sur la base de l'impédance et de l'angle de phase, une épaisseur de film d'huile et un rapport de contact métallique entre le palier coulissant (3) et l'arbre de rotation (7), dans lequel
l'unité de dérivation dérive l'épaisseur de film d'huile et le rapport de contact métallique en utilisant une formule de calcul correspondant à un circuit électrique construit par un contact linéaire généré entre le palier coulissant (3) et l'arbre de rotation (7) dans le dispositif à palier (2).

7. Programme pour amener un ordinateur à fonctionner comme :
une unité d'acquisition configurée pour acquérir, par rapport à un dispositif à palier (2) comportant un palier coulissant (3),une impédance et un angle de phase d'un circuit électrique comportant le palier coulissant (3) et un arbre de rotation (7) au moment de l'application d'une tension AC, qui sont acquis lorsque la tension AC est appliquée au circuit électrique ; et
une unité de dérivation configurée pour dériver, sur la base de l'impédance et de l'angle de phase, une épaisseur de film d'huile et un rapport de contact métallique entre le palier coulissant (3) et l'arbre de rotation (7), dans lequel
l'unité de dérivation dérive l'épaisseur de film d'huile et le rapport de contact métallique en utilisant une formule de calcul correspondant à un circuit électrique construit par un contact linéaire généré entre le palier coulissant (3) et l'arbre de rotation (7) dans le dispositif à palier (2).
